(19) Europäisches Patentamt
European Patent Office
Office européen des brevets

(11) Veröffentlichungsnummer: **0 471 301 A2**

(12) # EUROPÄISCHE PATENTANMELDUNG

(21) Anmeldenummer: **91113365.0**

(22) Anmeldetag: **08.08.91**

(51) Int. Cl.[5]: **C09D 183/04**, C04B 41/00, C03C 17/30, C09D 163/00

(30) Priorität: **09.08.90 DE 4025215**

(43) Veröffentlichungstag der Anmeldung: **19.02.92 Patentblatt 92/08**

(84) Benannte Vertragsstaaten: **BE CH DE FR GB LI NL**

(71) Anmelder: **FRAUNHOFER-GESELLSCHAFT ZUR FÖRDERUNG DER ANGEWANDTEN FORSCHUNG E.V.**
**Leonrodstrasse 54**
**W-8000 München 19(DE)**

(72) Erfinder: **Arpac, Ertugrul, Dr.**
**Akdeniz Universitesi**
**Fen. Edebiyat Fakultesi Antalya(TR)**
Erfinder: **Glaubitt, Walther**
**Gablonzer Weg 16**
**W-8707 Veitshöchheim(DE)**
Erfinder: **Nass, Rüdiger, Dr.**
**Badstrasse 2**
**W-8705 Zellingen(DE)**

(74) Vertreter: **Barz, Peter, Dr. et al**
**Patentanwälte Dipl.-Ing. G. Dannenberg Dr. P. Weinhold, Dr. D. Gudel Dipl.-Ing. S. Schubert, Dr. P. Barz Siegfriedstrasse 8**
**W-8000 München 40(DE)**

(54) **Verfahren zur Herstellung eines alkalistabilen und abriebbeständigen Überzugs und Lack zur Verwendung in diesem Verfahren.**

(57) Es wird ein Verfahren zur Herstellung eines Lacks auf der Basis von hydrolysierbaren Silanen beschrieben, das dadurch gekennzeichnet ist, daß man eine oder mehrere hydrolysierbare Verbindungen der allgemeinen Formel (I)

$SiR_4$ (I)

in welcher die Reste R ausgewählt sind aus hydrolyierbaren Gruppen, Hydroxygruppen und nicht-hydrolysierbaren Gruppen, wobei mindestens einige der anwesenden nicht-hydrolysierbaren Gruppen mindestens eine Aminogruppe aufweisen und das Molverhältnis von anwesenden hydrolysierbaren Gruppen zu anwesenden Aminogruppen-haltigen Resten 5:1 bis 1:1 beträgt;
mit Wasser umsetzt, wobei ein Molverhältnis von Wasser zu anwesenden hydrolysierbaren Gruppen von 1:1 bis 0,4:1 gewählt wird, und man vor, während oder nach der Wasserzugabe mindestens eine Verbindung mit wenigstens zwei Epoxygruppen im Molekül in einer solchen Menge zusetzt, daß das Molverhältnis von Epoxidgruppen zu Aminogruppen in den nicht-hydrolysierbaren Resten der Verbindungen der allgemeinen Formel (I) im Bereich von 4:1 bis 1:4 liegt.

Ein nach diesem Verfahren erhältlicher Lack zeigt insbesondere eine ausgezeichnete Alkalibeständigkeit und Abriebbeständigkeit und eignet sich deshalb besonders für die Beschichtung von keramischen Materialien, Glas und Metallen.

EP 0 471 301 A2

Die vorliegende Erfindung betrifft ein Verfahren zur Herstellung eines alkalistabilen und abriebbeständigen Überzugs und einen Lack zur Verwendung in diesem Verfahren sowie die Herstellung eines derartigen Lacks.

Im Vergleich zu rein organischen Beschichtungssystemen zeigen siloxanhaltige Lackformulierungen, die durch Umsetzung von hydrolysierbaren Siliziumverbindungen mit Wasser oder wasserabspaltenden Mitteln hergestellt wurden, ein deutlich besseres Abriebverhalten und eine höhere Kratzfestigkeit. Sie sind jedoch in alkalischen Medien nicht beständig, d.h. bislang stehen keine siloxanhaltigen Lackformulierungen zur Verfügung, die alkalistabil sind.

Der vorliegenden Erfindung lag somit die Aufgabe zugrunde, einen Lack auf der Basis von hydrolysierbaren Silanen zur Verfügung zu stellen, der zu einem Überzug mit gutem abrasiven Verhalten führt und gleichzeitig auch eine hohe Stabilität im alkalischen Milieu aufweist.

Diese Aufgabe wurde erfindungsgemäß gelöst durch ein Verfahren zur Herstellung eines Lacks auf der Basis von hydrolysierbaren Silanen, das dadurch gekennzeichnet ist, daß man, gegebenenfalls in Anwesenheit eines Lösungsmittels, eine oder mehrere hydrolysierbare Verbindungen der allgemeinen Formel (I)

$SiR_4$ (I)

in welcher die Reste R, die gleich oder verschieden sein können, ausgewählt sind aus hydrolysierbaren Gruppen, Hydroxygruppen und nicht-hydrolysierbaren Gruppen, wobei mindestens einige der anwesenden nicht-hydrolysierbaren Gruppen mindestens eine primäre, sekundäre und/oder tertiäre Aminogruppe aufweisen und das Molverhältnis von anwesenden hydrolysierbaren Gruppen zu anwesenden Aminogruppenhaltigen Resten 5:1 bis 1:1 beträgt;
und/oder entsprechende durch hydrolytische Kondensation gebildete Oligomere vorzugsweise bei einer Temperatur von 0 bis 50°C, insbesondere 10 bis 30°C, mit Wasser umsetzt, wobei ein Molverhältnis von Wasser zu anwesenden hydrolysierbaren Gruppen von 1:1 bis 0,4:1 gewählt wird;
und man vor, während oder nach der Wasserzugabe mindestens eine Verbindung mit wenigstens zwei Epoxygruppen im Molekül in einer solchen Menge zusetzt, daß das Molverhältnis von Epoxidringen zu Aminogruppen in den nicht-hydrolysierbaren Resten der Verbindung(en) der allgemeinen Formel (I) im Bereich von 4:1 bis 1:4 liegt.

Gegenstand der Erfindung ist auch der nach dem obigen Verfahren herstellbare Lack und die Verwendung desselben zum Beschichten von Substraten.

Vorzugsweise werden die hydrolysierbaren Gruppen R in der obigen allgemeinen Formel (I) ausgewählt aus Alkoxy (insbesondere $C_{1-4}$-Alkoxy, wie z.B. Methoxy, Ethoxy, n-Propoxy, i-Propoxy und Butoxy), Aryloxy (insbesondere $C_{6-10}$-Aryloxy, z.B. Phenoxy), Acyloxy (insbesondere $C_{1-4}$-Acyloxy, wie z.B. Acetoxy und Propionyloxy) und Alkylcarbonyl (z.B. Acetyl).

Neben den oben genannten bevorzugten hydrolysierbaren Gruppen R können als weitere, ebenfalls geeignete Gruppen erwähnt werden Wasserstoff und Alkoxyreste mit 5 bis 20, insbesondere 5 bis 10 Kohlenstoffatomen und Alkoxysubstituierte Alkoxygruppen (wie z . B. $\beta$-Methoxyethoxy).

Da die hydrolysierbaren Gruppen R im Endprodukt praktisch nicht mehr vorhanden sind, sondern durch Hydrolyse verloren gehen, wobei das Hydrolyseprodukt früher oder später auch in irgendeiner geeigneten Weise entfernt werden muß, sind solche hydrolysierbare Gruppen R besonders bevorzugt, die keine Substituenten tragen und zur Hydrolyseprodukten mit niedrigem Molekulargewicht, wie z.B. niederen Alkoholen, wie Methanol, Ethanol, Propanol, n-, i-, sek- und tert-Butanol, führen.

Da es sich bei den Verbindungen der allgemeinen Formel (I) um hydrolysierbare Verbindungen handeln soll, versteht es sich von selbst, daß in diesen Verbindungen jeweils mindestens eine der Gruppen R eine hydrolysierbare Gruppe sein muß. Vorzugsweise werden jedoch Verbindungen eingesetzt, die mindestens zwei hydrolysierbare Gruppen R aufweisen, wobei Verbindungen mit drei oder vier hydrolysierbaren Gruppen R besonders bevorzugt werden. Da erfindungsgemäß in den Verbindungen der allgemeinen Formel (I) auch nicht-hydrolysierbare Gruppen R, die eine oder mehrere Aminogruppen aufweisen, vorhanden sein müssen, befindet sich unter den erfindungsgemäß eingesetzten hydrolysierbaren Verbindungen stets mindestens eine Verbindung der allgemeinen Formel (I), die höchstens drei hydrolysierbare Gruppen R aufweist.

Die nicht-hydrolysierbaren Gruppen R in der allgemeinen Formel (I) werden vorzugsweise ausgewählt aus Alkyl (insbesondere $c_{1-4}$-Alkyl, wie z.B. Methyl, Ethyl, Propyl und Butyl), Alkenyl (insbesondere $C_{2-4}$-Alkenyl, wie z.B. Vinyl, 1-Propenyl, 2-Propenyl und Butenyl), Alkinyl (insbesondere $C_{2-4}$-Alkinyl, wie Acetylenyl und Propargyl) und Aryl (insbesondere $C_{6-10}$-Aryl, wie z.B. Phenyl und Naphthyl), wobei die soeben genannten Gruppen gegebenenfalls einen oder mehrere unter den Reaktionsbedingungen inerte Substituenten, wie z.B. Alkoxy, aufweisen können. Die obigen Alkylreste schließen auch die entsprechenden

cyclischen und Aryl-substituierten Reste, wie z.B. Cyclohexyl und Benzyl, ein, während die Alkenyl- und Alkinylgruppen ebenfalls cyclisch sein können und die genannten Arylgruppen auch Alkarylgruppen (wie Tolyl und Xylyl) mit einschließen sollen. Besonders bevorzugte nicht-hydrolysierbare Gruppen R, unter denen sich erfindungsgemäß immer wenigstens ein Rest befinden muß, der mindestens eine Aminogruppe aufweist, sind Alkylgruppen.

Bei den Aminogruppen der nicht-hydrolysierbaren Reste der Verbindung(en) der allgemeinen Formel (I) handelt es sich bevorzugt um primäre und sekundäre Aminogruppen, insbesondere um sekundäre Aminogruppen.

Die nicht-hydrolysierbaren Reste der Verbindung(en) der allgemeinen Formel (I) können eine oder mehrere, bevorzugt ein bis drei Aminogruppen pro Rest enthalten. Die Aminogruppen liegen bevorzugt in an (vorzugsweise $C_{1-4}$-) Alkylreste R gebundener Form vor. Bei Anwesenheit von mehr als einer Aminogruppe im Rest R wird es besonders bevorzugt, wenn zumindest eine dieser Aminogruppen eine sekundäre Aminogruppe ist, die z.B. zwei (Alkyl)gruppen verbindet, wobei die eine Gruppe mit dem anderen Ende direkt an Si gebunden ist und die andere Gruppe am anderen Ende gegebenenfalls eine weitere (primäre oder sekundäre) Aminogruppe trägt. Ein typisches Beispiel für eine derartige Verbindung ist N-(2-Aminoethyl)-3-aminopropyltrimethoxysilan mit der Formel

$H_2N-CH_2-CH_2-NH-CH_2-CH_2-CH_2-Si(OCH_3)_3$

Weitere erfindungsgemäß bevorzugte Aminogruppen-haltige Verbindungen der allgemeinen Formel (I) sind das zur obigen Verbindung analoge Triethoxysilan, entsprechende Verbindungen, die an der endständigen Aminogruppe noch eine oder zwei (bevorzugt eine) Methyl- oder Ethylgruppen tragen, 3-Aminopropyltri(m)-ethoxysilan und 3-Aminopropylmethyldi(m)ethoxysilan.

Weitere Beispiele für erfindungsgemäß einsetzbare Aminogruppen-haltige Verbindungen der allgemeinen Formel (I) sind z.B. diejenigen mit den folgenden Strukturformeln:

$(C_2H_5O)_3SiCH_2-NH_2$
$(C_2H_5O)_3Si-p-C_6H_4-NH_2$
$(CH_3)(CH_3O)_2Si-CH_2-CH(CH_3)-CH_2-NH-(CH_2)_2-NH_2$
$(CH_3)(C_2H_5O)_2Si-(CH_2)_4-NH_2$
$(CH_3)_2(C_2H_5O)Si-CH_2-NH_2$
$(CH_3)(C_2H_5O)_2Si-CH_2-NH_2$
$(CH_3O)_3Si-(CH_2)_3-NH-(CH_2)_2-NH-(CH_2)_2-NH_2$
$(C_2H_5O)_3Si-(CH_2)_3-NH-(CH_2)_3-Si(OC_2H_5)_3$

Selbstverständlich können auch andere als die oben beschriebenen Verbindungen der allgemeinen Formel (I) als Aminogruppen-haltige Silane eingesetzt werden.

Die Verbindungen der allgemeinen Formel (I) können ganz oder teilweise in Form von Vorkondensaten eingesetzt werden, d.h. Verbindungen, die durch teilweise Hydrolyse der Verbindungen der Formel (I), entweder allein oder im Gemisch mit anderen hydrolysierbaren Verbindungen, wie sie weiter unten näher beschrieben werden, entstanden sind. Derartige, im Reaktionsmedium vorzugsweise lösliche Oligomere können geradkettige oder cyclische niedermolekulare Teilkondensate (Polyorganosiloxane) mit einem Kondensationsgrad von z.B. etwa 2 bis 100, insbesondere etwa 2 bis 6, sein.

Konkrete Beispiele für (zum Großteil im Handel erhältliche) Verbindungen der allgemeinen Formel (I), die erfindungsgemäß neben den bereits oben genannten Verbindungen bevorzugt eingesetzt werden, sind Verbindungen der folgenden Formeln:

$Si(OCH_3)_4$, $Si(OC_2H_5)_4$, $Si(O$-n- oder i-$C_3H_7)_4$
$Si(OC_4H_9)_4$, $Si(OOCCH_3)_4$
$CH_3-Si(OC_2H_5)_3$, $C_2H_5-Si(OC_2H_5)_3$,
$C_3H_7-Si(OCH_3)_3$, $C_6H_5-Si(OCH_3)_3$, $C_6H_5-Si(OC_2H_5)_3$,
$(CH_3)_2Si(OCH_3)_2$, $(CH_3)_2Si(OC_2H_5)_2$, $(CH_3)_2Si(OH)_2$,
$(C_6H_5)_2Si(OCH_3)_2$, $(C_6H_5)_2Si(OC_2H_5)_2$, $(i-C_3H_7)_3SiOH$,
$CH_2=CH-Si(OOCCH_3)_3$
$CH_2=CH-Si(OCH_3)_3$, $CH_2=CH-Si(OC_2H_5)_3$, $CH_2=CH-Si(OC_2H_4OCH_3)_3$,
$CH_2=CH-CH_2-Si(OCH_3)_3$,
$CH_2=CH-CH_2-Si(OC_2H_5)_3$,
$CH_2=CH-CH_2-Si(OOCCH_3)_3$,

$CH_2 = C(CH_3)\text{-}COO\text{-}C_3H_7\text{-}Si(OCH_3)_3$,
$CH_2 = C(CH_3)\text{-}COO\text{-}C_3H_7\text{-}Si(OC_2H_5)_3$,

$(CH_3O)_3Si\text{-}(CH_2)_2\text{-}$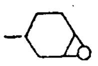

Die obigen Silane lassen sich nach bekannten Methoden herstellen; vgl. W. Noll, "Chemie und Technologie der Silicone", Verlag Chemie GmbH, Weinheim/Bergstraße (1968).

Im erfindungsgemäßen Herstellungsverfahren liegt das Verhältnis von in den Verbindungen der allgemeinen Formel (I) anwesenden hydrolysierbaren Gruppen zu den anwesenden Aminogruppen-enhaltenden Resten vorzugsweise im Bereich von 4:1 bis 2:1, insbesondere 3,5:1 bis 2,5:1. Im einfachsten Fall kann somit nur eine einzige Verbindung eingesetzt werden, die über drei hydrolysierbare Gruppen R und eine nicht-hydrolysierbare Gruppe R mit Aminogruppe(n) verfügt, z.B. N-(2-Aminoethyl)-3-aminopropyltri(m)-ethoxysilan.

Ebenfalls bevorzugt wird es, wenn im erfindungsgemäßen Herstellungsverfahren das Molverhältnis von eingesetztem Wasser zu hydrolysierbaren Gruppen in den Verbindungen der allgemeinen Formel (I) im Bereich von 0,7:1 bis 0,45:1 liegt. Besonders bevorzugt ist ein Verhältnis von 0,6:1 bis 0,5:1.

Neben den Siliciumverbindungen der allgemeinen Formel (I) können in untergeordneten Maße auch hydrolysierbare Verbindungen mit von Silicium verschiedenen Zentralatomen eingesetzt werden. Falls sie überhaupt Verwendung finden, machen diese Verbindungen insgesamt aber vorzugsweise weniger als 10 Molprozent, insbesondere weniger als 5 Molprozent, aller eingesetzten Ausgangsverbindungen aus. Bevorzugte Beispiele für von Silicium verschiedene Zentralatome sind Titan, Zirkon, Vanadium, Zinn, Blei und Bor. Als Verbindungen mit derartigen Zentralatomen kommen insbesondere solche in Frage, die über Gruppen R, wie sie oben für die Verbindungen der allgemeinen Formel (I) definiert wurden, verfügen. Es muß jedoch darauf geachtet werden, daß durch die Mitverwendung derartiger von den Verbindungen der allgemeinen Formel (I) verschiedener Verbindungen die gewünschten Eigenschaften, insbesondere Alkali- und Abriebbeständigkeit, der resultierenden Überzüge nicht merklich beeinträchtigt werden.

Geeignete hydrolysierbare Titan- und Zirkoniumverbindungen, die erfindungsgemäß eingesetzt werden können (vorzugsweise in Mengen von nicht mehr als 5 Molprozent), sind solche der allgemeinen Formel (II)

$MR'_4$ (II)

in der M Ti oder Zr bedeutet und R' wie R definiert ist. Besonders bevorzugt handelt es sich bei den Verbindungen der Formel (II) um solche, die über vier hydrolysierbare Gruppen R' verfügen.

Konkrete Beispiele für einsetzbare Zirkonium- und Titanverbindungen sind die folgenden:

$Ti(OC_2H_5)_4$, $Ti(OC_3H_7)_4$,
$Ti(O\text{-}i\text{-}C_3H_7)_4$, $Ti(OC_4H_9)_4$, $Ti(2\text{-ethylhexoxy})_4$;
$Zr(OC_2H_5)_4$, $Zr(OC_3H_7)_4$, $Zr(O\text{-}i\text{-}C_3H_7)_4$, $Zr(OC_4H_9)_4$,
$Zr(2\text{-ethylhexoxy})_4$

Im Falle der Titan- und Zirkoniumverbindungen können einige der an das Zentralatom gebundenen Reste durch Chelatliganden ersetzt sein. Als Beispiele fur derartige Chelatverbindungen können Acetylaceton, Acetessigsäureester und dergleichen, genannt werden.

Erwähnt werden sollte in diesem Zusammenhang auch, daß (hydrolysierbare) Verbindungen des Titans und Zirkons, insbesondere die Alkoholate, auch Epoxidringöffnung und -polymerisation katalysieren können.

Weitere hydrolysierbare Verbindungen, die erfindungsgemäß in untergeordnetem Maße (vorzugsweise unter 5 Molprozent) eingesetzt werden können, sind z.B. Borsäureester (wie z.B. $B(OCH_3)_3$ und $B(OC_2H_5)_3$), Zinntetraalkoxide (wie z.B. $Sn(OCH_3)_4$) und Vanadylverbindungen, wie z.B. $VO(OCH_3)_3$.

Wie für die Siliciumverbindungen der allgemeinen Formel (I) gilt auch für die übrigen erfindungsgemäß einsetzbaren hydrolysierbaren Verbindungen, daß die hydrolysierbaren Reste vorzugsweise zu Hydrolyseprodukten führen, die ein geringes Molekulargewicht aufweisen. Bevorzugte Reste sind deshalb $C_{1-4}$-Alkoxy (z.B. Methoxy, Ethoxy und Propoxy).

Bei Anwesenheit von Titan- und/oder Zirkoniumverbindungen in der zu hydrolysierenden Mischung

gelten die obigen Ausführungen hinsichtlich der Verhältnisse der einzelnen Gruppen und Verbindungen zueinander entsprechend. Betont werden muß in diesem Zusammenhang noch, daß die oben angegebenen Bereiche sich auf eingesetzte Monomere, d.h. noch nicht vorkondensierte Verbindungen beziehen. Wie bereits oben erwähnt, können derartige Vorkondensate erfindungsgemäß aber Verwendung finden, wobei diese Vorkondensate durch Einsatz einer einzigen Verbindung oder durch Einsatz mehrerer Verbindungen, die gegebenenfalls auch unterschiedliche Zentralatome aufweisen können, gebildet werden können.

Die Herstellung des erfindungsgemäßen Lacks kann in auf diesem Gebiet üblicher Art und Weise erfolgen. Werden (praktisch) ausschließlich (bei der Hydrolyse relativ reaktionsträge) Siliciumverbindungen eingesetzt, kann die Hydrolyse in den meisten Fällen dadurch erfolgen, daß man der oder den zu hydrolysierenden Siliciumverbindungen, die entweder als solche oder gelöst in einem geeigneten Lösungsmittel vorliegen (siehe unten) die erfindungsgemäß erforderliche Menge Wasser bei Raumtemperatur oder unter leichter Kühlung direkt zugibt (vorzugsweise unter Rühren) und die resultierende Mischung daraufhin einige Zeit (z.B. eine bis mehrere Stunden) rührt. Bei Anwesenheit der reaktiveren Verbindungen von Ti und Zr empfiehlt sich in der Regel eine stufenweise Zugabe des Wassers. Unabhängig von der Reaktivität der anwesenden Verbindungen erfolgt die Hydrolyse bei einer Temperatur nicht über 50°C, vorzugsweise zwischen 0°c und 30°C bzw. dem Siedepunkt des gegebenenfalls eingesetzten Lösungsmittels. Die Anwesenheit eines Lösungsmittels ist nicht unbedingt erforderlich, insbesondere dann, wenn es sich bei den hydrolysierbaren Gruppen R und R' um solche handelt, die bei der Hydrolyse zur Bildung von niederen Alkoholen, wie z.B. Methanol, Ethanol, Propanol und Butanol führen. Andernfalls sind geeignete Lösungsmittel (die auch die Epoxyverbindung zu lösen vermögen) z.B. die soeben genannten Alkohole, insbesondere Butanol, Toluol, Essigsäureethylester, Glycolsäurebutylester, Methylethylketon, Butoxyethanol und Mischungen derselben; Butoxyethanol wird besonders bevorzugt.

Da mit den Aminogruppen in den nicht-hydrolysierbaren Gruppen R der Verbindungen der allgemeinen Formel (I) bereits ein Hydrolyse- bzw. Kondensationskatalysator anwesend ist, ist die Zugabe eines derartigen Katalysators erfindungsgemäß nicht erforderlich. Sollte ein zusätzlicher Katalysator aber dennoch gewünscht werden, so sind Beispiele für geeignete Verbindungen anorganische Basen und tertiäre Amine, wie Ammoniak, Alkali- und Erdalkalimetallhydroxide (z.B. Natrium-, Kalium- oder Calciumhydroxid) und Triethylamin. In jedem Fall sollte der zusätzlich eingesetzte Katalysator zumindest dann, wenn die Epoxyverbindung vor oder während der Hydrolyse zugegeben werden soll, nicht in der Lage sein, unter den Hydrolysebedingungen eine merkliche Epoxidringöffnung zu katalysieren.

Die zur Herstellung des erfindungsgemäßen Lacks verwendete Verbindung mit mindestens zwei Epoxygruppen im Molekül kann den Verbindungen der allgemeinen Formel (I) vor, während oder nach der Wasserzugabe zugesetzt werden. Gegebenenfalls wird die Epoxyverbindung zu diesem Zweck in einem geeigneten Lösungsmittel gelöst, z.B. einem Lösungsmittel, das oben im Zusammenhang mit der Hydrolyse der Siliziumverbindungen beschrieben wurde.

Wie bereits erwähnt, kommt es auf die Reihenfolge der Vermischung von Epoxyverbindung, Siliziumverbindung und Wasser nicht an. So können z.B. zunächst die Epoxyverbindung und die Siliziumverbindung, gegebenenfalls in Anwesenheit eines Lösungsmittels, vermischt werden, worauf die Wasserzugabe erfolgt. Alternativ dazu kann aber z.B. auch die Siliziumverbindung zunächst mit Wasser umgesetzt werden, worauf die Epoxyverbindung mit dem (Teil)hydrolysat vermischt wird.

Wenn die Mischung aus Verbindungen der allgemeinen Formel (I) und Wasser keinen zusätzlich zugegebenen Katalysator enthält, ist sie praktisch unbegrenzt haltbar. So kann man diese Mischung z.B. getrennt herstellen und den eigentlichen Lack erst in situ auf dem Substrat erzeugen, indem man die Mischung einerseits und die Polyepoxyverbindung andererseits gleichzeitig aus getrennten Vorratsbehältern auf das Substrat aufbringt (z.B. durch Sprühen).

Zur Herstellung des erfindungsgemäßen Lackes geeignete Epoxyverbindungen müssen mindestens zwei Epoxidringe im Molekül aufweisen. Bevorzugte Polyepoxyverbindungen enthalten zwei oder drei Epoxidringe, insbesondere zwei Epoxidringe im Molekül. Die Polyepoxyverbindungen werden vorzugsweise in einer solchen Menge eingesetzt, daß das Molverhältnis von Epoxidringen zu Aminogruppen in den nicht-hydrolysierbaren Resten der Verbindung(en) der allgemeinen Formel (I) im Bereich von 3:1 bis 1:3, insbesondere 2:1 bis 1:2, liegt.

Obwohl als Polyepoxyverbindungen generell alle derartigen Verbindungen eingesetzt werden können, die bei Raumtemperatur oder leicht erhöhter Temperatur nicht spontan mit den Verbindungen der allgemeinen Formel (I) und/oder mit Wasser reagieren, werden aromatische und cycloaliphatische Polyepoxide erfindungsgemäß bevorzugt. Beispiele für derartige Verbindungen sind Polyglycidylether von aromatischen Polyhydroxyverbindungen, insbesondere Bisglycidylether von Bisphenolen, und cycloaliphatische Polyepoxide, die über mindestens einen Cyclohexanring verfügen.

Unter den Bisglycidylethern von Bisphenolen sind diejenigen besonders bevorzugt, die sich von

Bisphenolen der allgemeinen Formel

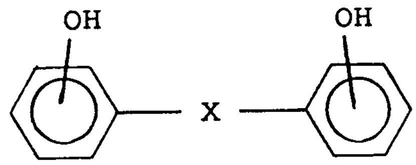

(III)

ableiten, in welcher X für eine kovalente Bindung, O, CO, $SO_2$ oder eine Alkylen- oder Alkylidengruppe mit 1 bis 6 Kohlenstoffatomen, insbesondere $CH_2$ und $C(CH_3)_2$, steht. Gegebenenfalls können die Phenylringe noch jeweils einen oder mehrere inerte Substituenten tragen, z.B. $C_{1-4}$-Alkyl- und/oder Alkoxygruppen. Ein besonders bevorzugter Vertreter der Bisglycidylether von Bisphenolen ist die von Bisphenol A abgeleitete Verbindung.

Von den cycloaliphatischen Polyepoxiden seien insbesondere diejenigen der folgenden allgemeinen Strukturformeln genannt:

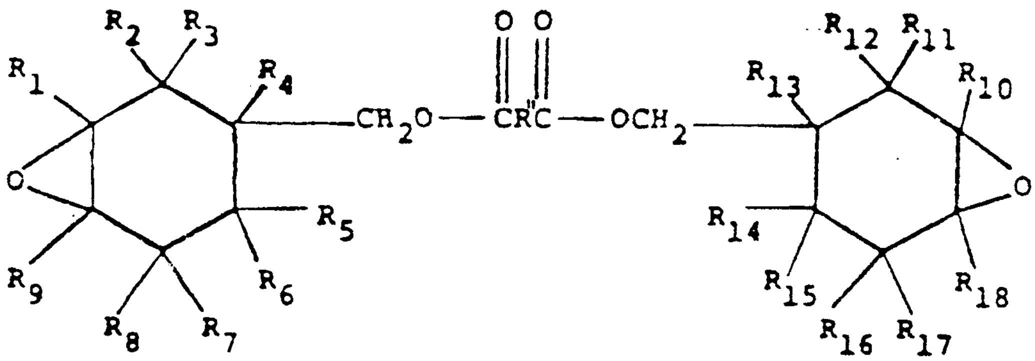

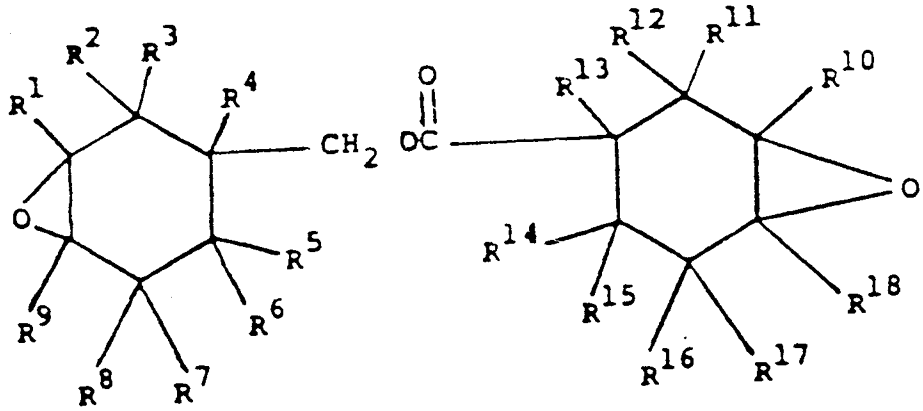

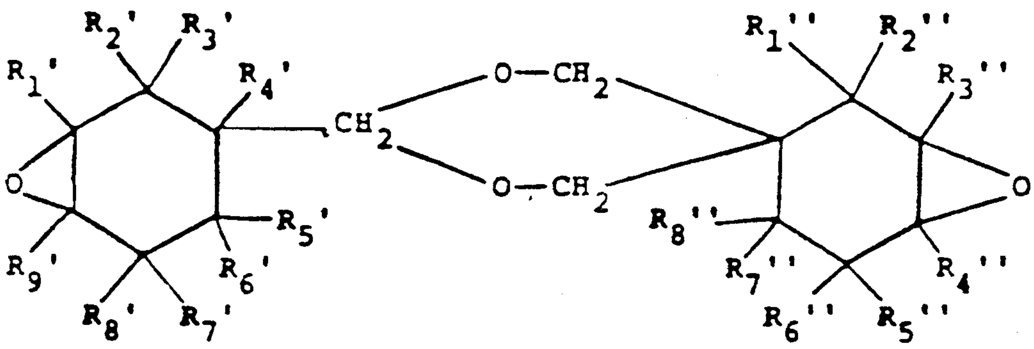

In den obigen Formeln stehen die verschiedenen Reste R, die gleich oder verschieden sein können, insbesondere für Wasserstoff und $C_{1-4}$-Alkylgruppen. R" ist bevorzugt eine (aliphatische, aromatische oder cycloaliphatische) Kohlenwasserstoffgruppe mit 1 bis 10 Kohlenstoffatomen, z.B. Ethylen, Butylen, Phenylen, Cyclohexylen, und Methylenphenylenmethylen. Konkrete Beispiel für Verbindungen der obigen allgemeinen Strukturformeln sind z.B. die folgenden:

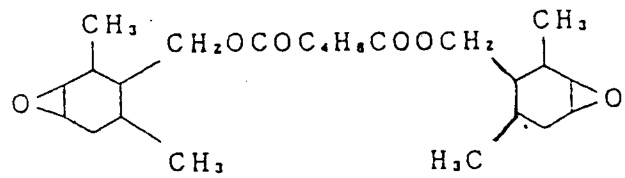

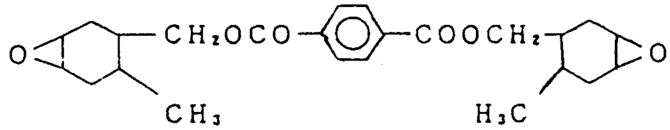

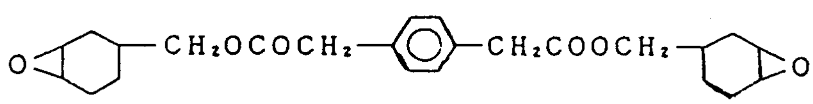

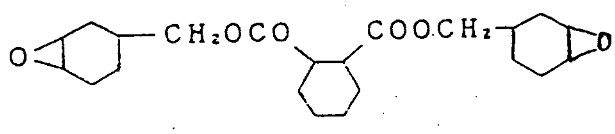

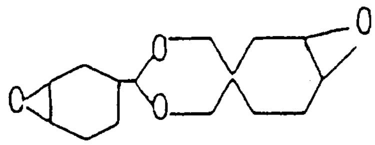

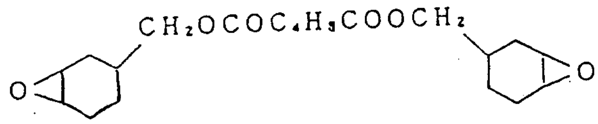

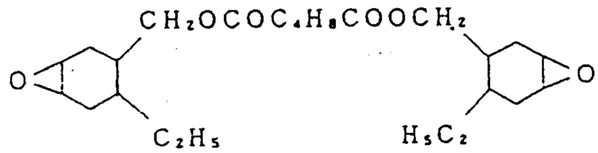

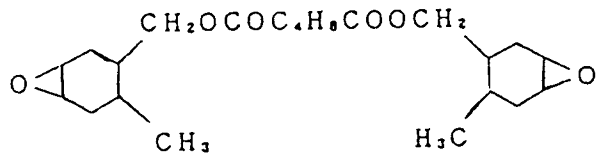

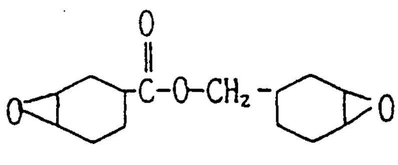

Diese Verbindungen sind zum Großteil im Handel erhältlich.

Weitere Beispiele für erfindungsgemäß einsetzbare Polyepoxyverbindungen sind z.B. Vinylcyclohexendiepoxid und ein Verbindung der Formel

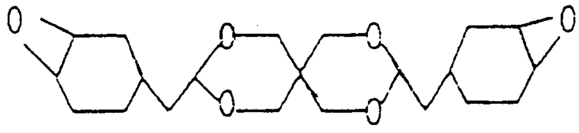

Der wie oben hergestellte Lack kann dann entweder als solcher oder nach teilweiser oder nahezu vollständiger Entfernung des verwendeten Lösungsmittels bzw. des während der Reaktion gebildeten Lösungsmittels (z.B. der durch Hydrolyse der Alkoxide entstandenen Alkohole) und/oder nach Zugabe eines geeigneten Lösungsmittels zwecks Viskositätserniedrigung auf ein geeignetes Substrat aufgebracht werden.

Insbesondere wenn die Herstellung des Lacks ohne Lösungsmittel und unter Wasserzugabe im unteren Teil des erfindungsgemäßen Bereichs erfolgte, kann es erforderlich sein, den Lack vor dem Auftragen mit einem geeigneten organischen Lösungsmittel zu verdünnen. Für diesen Zweck besonders geeignet sind die bereits oben genannten Lösungsmittel. Beachtet werden sollte dabei, daß die Verwendung von Lösungsmittel unter Umständen die Abriebbeständigkeit des resultierenden Überzugs herabsetzt. Wird der Lack mit einem Lösungsmittel verdünnt, so liegt das Mengenverhältnis von Lack zu Lösungsmittel (inklusive dem bereits bei der Hydrolyse eingesetzten Lösungsmittel) vorzugsweise im Bereich von 1:0,5 bis 1:2.

Selbstverständlich können dem Lack vor der Auftragung noch die üblichen Additive zugesetzt werden, wie z.B. Färbemittel, Füllstoffe, Oxidationsinhibitoren, Verlaufmittel, UV-Absorber und dergleichen.

Der erfindungsgemäße Lack kann durch übliche Beschichtungsverfahren auf geeignete Substrate aufgebracht werden, z.B. durch Tauchen, Fluten, Ziehen, Gießen, Schleudern, Spritzen oder Aufstreichen. Besonders bevorzugt werden erfindungsgemäß das Tauchen und das Sprühen.

Vor der Härtung wird der aufgetragene Lack vorzugsweise (bei Raumtemperatur oder leicht erhöhter Temperatur) getrocknet. Bevorzugte Schichtdicken (im gehärteten Zustand) liegen bei 5 bis 20, insbesondere 5 bis 15 µm. Selbstverständlich ist das erfindungsgemäße Verfahren nicht darauf beschränkt, nur eine einzige Lackschicht auf dem Substrat aufzubringen, sondern es besteht auch die Möglichkeit, nach dem Auftragen und gegebenenfalls Aushärten einer Schicht weitere Schichten aufzutragen und damit zu Multi-Layer-Strukturen zu gelangen.

Nach der gegebenenfalls vorgenommenen Trocknung kann der auf das Substrat aufgetragene Lack in an sich bekannter Weise gehärtet werden.

Im Falle der thermischen Härtung liegen die Härtungstemperaturen vorzugsweise bei mindestens 90 °C, insbesondere mindestens 100 °C. Besonders bevorzugte Bereiche sind 100 bis 200 °C, insbesondere 130 bis 170 °C. Die Härtungstemperatur im Einzelfall hängt insbesondere von der thermischen Stabilität des zu beschichtenden Substrats ab. Ebenso kann die erforderliche Härtungszeit in Abhängigkeit von den konkreten Härtungsbedingungen in weitem Rahmen variieren, z.B. von unter einer Minute bis zu mehreren Stunden.

Als zu beschichtende Substrate werden erfindungsgemäß keramische Materialien, Glas und Metalle besonders bevorzugt, wenngleich sich auch andere Substrate, z.B. aus Kunststoff, Papier und Holz mit dem erfindungsgemäßen Lack in zufriedenstellender Weise beschichten lassen.

Besonders bevorzugte Substrate zur Beschichtung mit dem erfindungsgemäßen Lack sind solche aus Porzellan, Bleikristallglas und Aluminium. Hervorgehoben werden sollte in diesem Zusammenhang auch, daß der erfindungsgemäße Lack z.B. auf Aluminium ohne Vorbehandlung der Oberfläche desselben ausgezeichnet haftet.

Um eine ausgezeichnete Haftung des Überzugs auf dem Substrat zu gewährleisten kann es empfehlenswert sein, das Substrat vor der Beschichtung einer Oberflächenbehandlung, z.B. durch Auslaugen, Grundieren mit einer Primer, Koronabehandlung usw. zu unterziehen.

Mit der vorliegenden Erfindung wird insbesondere ein vergleichsweise einfaches Verfahren zur Herstellung alkalistabiler und zugleich abriebfester Beschichtungen auf Formkörpern zur Verfügung gestellt. Besonders überraschend ist, daß die Hydrolyse in einfachster Form erfolgen kann. Die erfindungsgemäß hergestellten Überzüge sind in hohem Maß schwitzwasserstabil und alkalibeständig, zeigen gute optische Eigenschaften, sind abriebbeständig und haften gut auf dem Substrat. Sie eignen sich besonders als Beschichtungen für unglasierte Porzellangegenstände und führen dazu, daß Oberflächenrauhigkeiten des Substrats eingeebnet werden. Üblicherweise wurden solche Oberflächenrauhigkeiten durch arbeitsaufwendige und teure Schleifprozesse beseitigt.

Die folgenden Beispiele sollen die vorliegende Erfindung weiter erläutern, ohne aber ihren Umfang zu beschränken.

Beispiel 1

24 g technischer Bisphenol-A-Diglycidylether mit einem Epoxidgehalt von 4,2 mmol/g wurden in 10 ml Butoxyethanol gelöst und mit 11 g (50 mmol) N-Aminoethyl-3-aminopropyltrimethoxysilan versetzt. Zur Mischung wurden 1,4 g Wasser gegeben und daraufhin wurde 30 Minuten bei Raumtemperatur gerührt. Der resultierende Lack wurde durch Tauchen auf keramische Substrate (Porzellan) aufgebracht und 60 Minuten bei 150 °C gehärtet. Der fertige Überzug war in alkalischer Lösung über 1000 Stunden lang beständig

(Testbedingungen: gerührtes Wasserbad, 60°C, pH 12). Er war haftfest, abriebbeständig und wies eine Ritzhärte von 2,0 g auf.

Beispiel 2

24 g technischer Bisphenol-A-Diglycidylether mit einem Epoxidgehalt von 4,2 mmol/g wurden in 10 ml Butoxyethanol gelöst und mit 5,5 g (25 mmol) N-Aminoethyl-3-aminopropyltrimethoxysilan versetzt. Daraufhin wurden 0,7 g Wasser zugegeben und die Mischung wurde 30 Minuten bei Raumtemperatur gerührt. Der Lack wurde in gleicher Weise wie in Beispiel 1 auf keramische Körper aufgetragen und gehärtet. Der resultierende Überzug war in alkalischer Lösung 800 Stunden beständig, haft- und abriebfest und wies eine Ritzhärte von 1,0 g auf.

Beispiel 3

24 g technischer Bisphenol-A-Diglycidylether mit einem Epoxidgehalt von 4,2 mmol/g wurden in 10 ml Butoxyethanol gelöst und mit 16,5 g (75 mmol) N-Aminoethyl-3-aminopropyltrimethoxysilan versetzt. Daraufhin wurden 2,1 g Wasser zugegeben und die resultierende Mischung wurde 30 Minuten bei Raumtemperatur gerührt. Der Lack wurde in gleicher Weise wie in Beispiel 1 auf keramische Körper aufgetragen und gehärtet. Der resultierende Überzug war in alkalischer Lösung 533 Stunden beständig, war haft- und abriebfest und wies eine Ritzhärte von 2,5 g auf.

Beispiel 4

Bleikristallglas wurde durch Tauchen mit dem Lack von Beispiel 1 überzogen, der dann 60 Minuten bei 150°C gehärtet wurde. Der resultierende Überzug war alkalibeständig, haft- und abriebfest und zeigte eine Ritzhärte von 2,0 g.

Beispiel 5

35 g Bis-(3,4-epoxy-cyclohexylmethyl)-adipat mit einem Epoxidgehalt von 5,5 mmol/g wurden in 10 ml Butoxyethanol gelöst und mit 11 g (50 mmol) N-Aminoethyl-3-aminopropyltrimethoxysilan versetzt. Daraufhin wurden 1,4 g Wasser zugegeben und die resultierende Mischung wurde 30 Minuten bei Raumtemperatur gerührt. Der resultierende Lack wurde durch Tauchen auf keramische Substrate (Porzellan) aufgebracht und 60 Minuten bei 150°C gehärtet. Der so erhaltene Überzug war in alkalischer Lösung beständig, haftfest, abriebbeständig und wies eine Ritzhärte von 2,0 g auf.

Beispiel 6

Bleikristallglas wurde durch Tauchen mit dem Lack aus Beispiel 5 überzogen, der dann 60 Minuten bei 150°C gehärtet wurde. Der resultierende Überzug war alkalibeständig, haft- und abriebfest und zeigte eine Ritzhärte von 2,0 g.

Beispiel 7

100 g eines im Handel erhältlichen Bisphenol-A-Diglycidyletherharzes mit einem Epoxidgehalt von 4,2 mmol/g (Araldit® Gießharz G2 der Carl Roth GmbH & Co.) wurden unter Rühren mit 150 g Butoxyethanol versetzt. Daraufhin wurden 40 g N-Aminoethyl-3-aminopropyl-trimethoxysilan langsam zugegeben. Unter weiterem Rühren wurden langsam 4,9 g Wasser zugetropft, wobei eine leichte Temperaturerhöhung zu beobachten war. Die leicht gelblich gefärbte, klare Lösung war nach 1 - 2-stündigem Rühren beschichtungsfertig. Ebenso ist es z.B. möglich, das Aminosilan in 25 g Butoxyethanol innerhalb von 2 Stunden mit der angegebenen Wassermenge zu hydrolysieren, die resultierende klare Lösung zu der angegebenen Menge an Epoxidharz in 25 g Butoxyethanol zu geben und daraufhin das restliche Lösungsmittel (100 g) zuzusetzen.

Der wie oben hergestellte Lack wurde dann durch Streichen auf Keramikplatten aufgebracht und bei 150°C 45 min. gehärtet. Der resultierende Überzug (A2) wurde dann hinsichtlich seiner Haftbeständigkeit, Schwitzwasserbeständigkeit und seinem Verhalten im Spülmaschinentest und im Dauerspülversuch getestet. Auf dieselbe Weise wurden weitere Lacke hergestellt und getestet, und zwar solche mit einem Gewichtsverhältnis von Epoxidharz zu Aminosilan von 5:3 (A1) bzw. 5:1 (A3) bei einem konstanten

Molverhältnis von hydrolysierbaren Gruppen im Aminosilan zu Wasser. Die Lösungsmittelmenge wurde nach Bedarf variiert, um eine für die Beschichtung geeignete Viskosität zu erzielen.

In einer zweiten Versuchsreihe wurde unter ansonsten identischen Bedingungen ein im Handel erhältliches Bisphenol-A-Diglycidyletherharz mit einem Epoxidgehalt von 5 mmol/g (Rütapox®-Harz der Bakelite GmbH) eingesetzt, was die Überzüge B1, B2 und B3 lieferte. Die erzielten Ergebnisse sind in der folgenden Tabelle zusammengefaßt.

**T a b e l l e**

| Ü b e r z u g | A1 | A2 | A3 | B1 | B2 | B3 |
|---|---|---|---|---|---|---|
| Schichtdicke (µm) | * | 17-20 | * | * | * | * |
| Haftung | + | + | + | + | + | + |
| Schwitzwassertest | + | + | + | + | + | + |
| Spülmaschinentest | + | + | + | + | + | + |
| Dauerspülversuch** | 800 | 1000 | 533 | 533 | 533 | 533 |

* = nicht bestimmt

** = Zahl der Spülgänge, nach denen noch keine Veränderung des Überzugs erkennbar war

\+ = Test bestanden

Testverfahren

(a) Haftung

Die Haftung der Beschichtung wurde nach dem folgenden Verfahren getestet:

**Tesafilm-Abrißtest**

Ein Streifen eines handelsüblichen Tesafilms (Fa. Baiersdorf AG, Hamburg) wurde an einer unbeschädigten Stelle des Überzugs aufgebracht, luftblasenfrei festgedrückt und dann unter einem Winkel von 90° ruckartig abgzogen. Sowohl der Tesastreifen als auch die so behandelte Überzugsfläche wurde auf vorhandenes bzw. abgezogenes Beschichtungsmaterial untersucht.

Diese Methode erlaubt die Erkennung offensichtlicher Haftungsmängel.

Die Überprüfung der Haftung nach dem üblicherweise durchgeführten Gitterschnitt-Test (DIN 53151) war nur unzureichend durchführbar, da durch den Gitterschnitt zwar die aufgebrachten Schichten durchschnitten wurden, die harte Substratoberfläche jedoch hierbei erheblich verletzt wurde und teilweise abplatzte. Dies führt zu einer erheblichen Verfälschung der Meßwerte. Haupsächlich wurde daher zur Überprüfung der Haftung der Tesafilm-Abrißtest herangezogen.

(b) Schwitzwassertest (DIN 50017)

Die beschichtete Probe wurde 14 Tage lang in einem Wärmeschrank bei 40° C und hoher Luftfeuchtigkeit gelagert. Anschließend wurde die Haftung entsprechend (a) beurteilt. Lagen die gefundenen Werte im gleichen Bereich, wurde der Test als bestanden gewertet.

(c) Spülmaschinentest

Zur schnellen Überprüfung der Spülmaschinenbeständigkeit wurden die Proben für 2 Stunden in einer 3%-igen Lösung eines handelsüblichen Geschirrspülmaschinenreinigers (Somat® der Henkel AG) gelagert. Anschließend wurde die Haftung entsprechend (a) beurteilt. Lagen die gefundenen Werte im gleichen Bereich wie vor der Prüfung, wurde der Test als bestanden gewertet. Weiterhin wurde das optische Erscheinungsbild (Farbveränderungen, Rißbildung etc.) mit in die Bewertung einbezogen.

## Patentansprüche

1. Verfahren zur Herstellung eines Lacks auf der Basis von hydrolysierbaren Silanen, dadurch gekennzeichnet, daß man eine oder mehrere hydrolysierbare Verbindungen der allgemeinen Formel (I)

   $SiR_4$ (I)

   in welcher die Reste R, die gleich oder verschieden sein können, ausgewählt sind aus hydrolysierbaren Gruppen, Hydroxygruppen und nicht-hydrolysierbaren Gruppen, wobei mindestens einige der anwesenden nicht-hydrolysierbaren Gruppen mindestens eine Aminogruppe aufweisen und das Molverhältnis von anwesenden hydrolysierbaren Gruppen zu anwesenden Aminogruppen-haltigen Resten 5:1 bis 1:1 beträgt;

   und/oder entsprechende durch hydrolytische Kondensation gebildete Oligomere mit Wasser umsetzt, wobei ein Molverhältnis von Wasser zu anwesenden hydrolysierbaren Gruppen von 1:1 bis 0,4:1 gewählt wird;

   und man vor, während oder nach der Wasserzugabe mindestens eine Verbindung mit wenigstens zwei Epoxygruppen im Molekül in einer solchen Menge zusetzt, daß das Molverhältnis von Epoxygruppen zu Aminogruppen in den nicht-hydrolysierbaren Resten der Verbindung(en) der allgemeinen Formel (I) im Bereich von 4:1 bis 1:4 liegt.

2. Verfahren nach Anspruch 1, dadurch gekennzeichnet, daß die hydrolysierbaren Gruppen ausgewählt werden aus Alkoxy, Aryloxy, Acyloxy und Alkylcarbonyl, insbesondere Alkoxy.

3. Verfahren nach irgendeinem der Ansprüche 1 und 2, dadurch gekennzeichnet, daß die nicht-hydrolysierbaren Gruppen ausgewählt werden aus Alkyl-, Alkenyl-, Alkinyl- und Arylresten, wobei einige dieser Reste zusätzlich ein bis drei Aminogruppen aufweisen.

4. Verfahren nach irgendeinem der Ansprüche 1 bis 3, dadurch gekennzeichnet, daß die Verbindungen der allgemeinen Formel (I) N-(2-Aminoethyl)-3-aminopropyltri(m)ethoxysilan, gegebenenfalls mit einer Methyl- oder Ethylgruppe am N-Atom der Aminoethylgruppe substituiert, 3-Aminopropyltri(m)-ethoxysilan und/oder 3-Aminopropylmethyldi(m)ethoxysilan umfassen.

5. Verfahren nach irgendeinem der Ansprüche 1 bis 4, dadurch gekennzeichnet, daß das Verhältnis von hydrolysierbaren Gruppen zu Aminogruppen-haltigen Resten 4:1 bis 2:1, insbesondere 3,5:1 bis 2,5:1, beträgt.

6. Verfahren nach irgendeinem der Ansprüche 1 bis 5, dadurch gekennzeichnet, daß das Molverhältnis von Wasser zu hydrolysierbaren Gruppen 0,7:1 bis 0,45:1, insbesondere 0,6:1 bis 0,5:1, beträgt.

7. Verfahren nach irgendeinem der Ansprüche 1 bis 6, dadurch gekennzeichnet, daß das Molverhältnis von Epoxidringen zu Aminogruppen in den nicht-hydrolysierbaren Resten der Verbindung(en) der allgemeinen Formel (I) in Bereich von 3:1 bis 1:3, insbesonder 2:1 bis 1:2, liegt.

8. Verfahren nach irgendeinem der Ansprüche 1 bis 7, dadurch gekennzeichnet, daß die Verbindungen mit wenigstens zwei Epoxygruppen im Molekül Polyglycidylether von aromatischen Polyhydroxyverbindungen, insbesondere Bisglycidylether von Bisphenolen, und/oder cycloaliphatische Polyepoxide umfassen.

9. Verfahren nach Anspruch 8, dadurch gekennzeichnet, daß sich die Bisglycidylether von Bisphenolen der allgemeinen Formel (III)

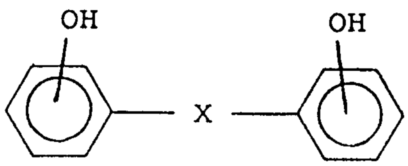

(III)

ableiten, in welcher X für eine kovalente Bindung, O, CO, $SO_2$ oder eine Alkylen- oder Alkylidengruppe mit 1 bis 6 Kohlenstoffatomen, insbesonder $CH_2$ und $C(CH_3)_2$, steht.

**10.** Verfahren nach irgendeinem der Ansprüche 1 bis 9, dadurch gekennzeichnet, daß die Umsetzung der Verbindung(en) der allgemeinen Formel (I) mit Wasser bei einer Temperatur von 0 bis 50 °C, vorzugsweise 10 bis 30 °C, durchgeführt wird.

**11.** Lack, erhältlich nach dem Verfahren gemäß irgendeines der Ansprüche 1 bis 10.

**12.** Verfahren zum Beschichten von Substraten mit einem alkalistabilen und abriebbeständigen Überzug, dadurch gekennzeichnet, daß man einen Lack gemäß Anspruch 11 auf das Substrat aufbringt und anschließend eine thermische Härtung durchführt.

**13.** Verfahren nach Anspruch 12, dadurch gekennzeichnet, daß der Lack, falls erforderlich, vor dem Auftragen mit einem organischen Lösungsmittel, vorzugsweise ausgewählt aus Toluol, Butanol, Essigester, Glykolsäurebutylester, Butoxyethanol, Methylethylketon und Mischungen derselben, auf eine geeignete Viskosität eingestellt wird.

**14.** Verfahren nach Anspruch 12, dadurch gekennzeichnet, daß man die mit Wasser umgesetzte(n) Verbindung(en) der allgemeinen Formel (I) und die Verbindung(en) mit wenigstens zwei Epoxygruppen im Molekül aus zwei getrennten Vorratsbehältern gleichzeitig auf das Substrat aufbringt.

**15.** Verfahren nach irgendeinem der Ansprüche 12 bis 14, dadurch gekennzeichnet, daß der Lack vor der Härtung vorzugsweise bei Raumtemperatur getrocknet wird.

**16.** Verfahren nach irgendeinem der Ansprüche 12 bis 15, dadurch gekennzeichnet, daß die Härtung thermisch bei Temperaturen von mindestens 90 °C, vorzugsweise bei Temperaturen von 100 bis 200 °C, und insbesondere 130 bis 170 °C, erfolgt.

**17.** Verfahren nach irgendeinem der Ansprüche 12 bis 16, dadurch gekennzeichnet, daß das Substrat ausgewählt wird aus keramischen Materialien, insbesondere Porzellan, Glas, insbesondere Bleikristallglas, und Metallen, insbesondere Aluminium.